# EUROPEAN PATENT APPLICATION

(11) **EP 3 139 258 A1**
(43) Date of publication of application: **08.03.2017**
(21) Application number: 14892383.2
(22) Date of filing: 22.05.2014
(51) Int. Cl.: G06F 3/0484

(54) **METHOD AND APPARATUS FOR CONTROLLING AUTOMATIC ROTATION OF SCREEN, AND TERMINAL**

(71) Applicant: Huawei Technologies Co. Ltd., Shenzhen, Guangdong 518129 (CN)
(72) Inventor: HE, Jiabin, Shenzhen Guangdong 518129 (CN)
(74) Representative: Körber, Martin Hans
(86) International application number: PCT/CN2014/078140
(87) International publication number: WO 2015/176282

(57) **Abstract**

A method, an apparatus, and a terminal for controlling screen auto-rotation relate to the communications field, where the method includes: detecting whether the terminal rotates in a gravity direction; when it is detected that the terminal rotates in the gravity direction, determining whether a first specified operation of a user is received, where the first specified operation is used to trigger disabling of a screen auto-rotation function; and disabling screen auto-rotation if the first specified operation of the user is received; or triggering screen auto-rotation if the first specified operation of the user is not received. The apparatus includes a detection module, a determining module, and a control module. The terminal includes a processor and a memory. The present invention implements limitation on a screen auto-rotation function based on a specified operation, a user does not need to manually disable the screen auto-rotation function, and operations are easy and convenient, which simplifies an operation procedure and is easy to use.

## Description

### TECHNICAL FIELD

The present invention relates to the communications field, and in particular, to a method, an apparatus, and a terminal for controlling screen auto-rotation.

### BACKGROUND

Currently, a large-screen handheld terminal generally has a screen auto-rotation function. A user can activate the function by using a corresponding setting item. In a case in which the screen auto-rotation function is activated, as soon as a sensor inside the handheld terminal identifies a change in a horizontal direction or a vertical direction of the handheld terminal, the change is applied to screen auto-rotation.

However, when the user lies on his/her back or side, a direction of the user's face does not change relative to a direction of the handheld terminal. In this case, the user does not expect screen rotation, but screen auto-rotation is triggered because of a change in the direction of the handheld terminal, which causes an improper viewing angle of the screen and affects the use by the user. For this problem, currently the user can do nothing but manually disable the screen auto-rotation function, and there is no solution for the handheld terminal, which affects ease-of-use.

### SUMMARY

In view of this, embodiments of the present invention provide a method, an apparatus, and a terminal for controlling screen auto-rotation to improve ease-of-use of controlling screen auto-rotation. The technical solutions are as follows:

According to a first aspect, a method for controlling screen auto-rotation is provided, and is applied to a terminal, where the method includes:
detecting whether the terminal rotates in a gravity direction;
when it is detected that the terminal rotates in the gravity direction, determining whether a first specified operation of a user is received, where the first specified operation is used to trigger disabling of a screen auto-rotation function; and
disabling screen auto-rotation if the first specified operation of the user is received; or
triggering screen auto-rotation if the first specified operation of the user is not received.

With reference to the first aspect, in a first implementation manner, the first specified operation includes:
a pressing operation, a sliding operation, a dragging operation, an operation of continuously tapping on a screen for preset times, or a motion sensing operation.

With reference to the first aspect, in a second implementation manner, after the disabling screen auto-rotation if the first specified operation of the user is received, the method further includes:
triggering screen auto-rotation when a second specified operation of the user is detected.

With reference to the second implementation manner of the first aspect, in a third implementation manner, the second specified operation includes:
a touching and rotating operation of the user on a screen or a rotation motion sensing operation of the user.

According to a second aspect, an apparatus for controlling screen auto-rotation is provided, and is applied to a terminal, where the apparatus includes:
a detection module, configured to detect whether the terminal rotates in a gravity direction;
a determining module, configured to: when the detection module detects that the terminal rotates in the gravity direction, determine whether a first specified operation of a user is received, where the first specified operation is used to trigger disabling of a screen auto-rotation function; and
a control module, configured to: disable screen auto-rotation if the first specified operation of the user is received, or trigger screen auto-rotation if the first specified operation of the user is not received.

With reference to the second aspect, in a first implementation manner, the first specified operation includes:
a pressing operation, a sliding operation, a dragging operation, an operation of continuously tapping on a screen for preset times, or a motion sensing operation.

With reference to the second aspect, in a second implementation manner, the apparatus further includes:
a trigger module, configured to: after the first specified operation of the user is received and screen auto-rotation is disabled, trigger screen auto-rotation if a second specified operation of the user is detected; where
the second specified operation is used to trigger screen auto-rotation.

With reference to the second implementation manner of the second aspect, in a third implementation manner, the second specified operation includes:
a touching and rotating operation of the user on a screen or a rotation motion sensing operation of the user.

According to a third aspect, a terminal for controlling screen auto-rotation is provided, where the terminal includes a processor and a memory, where:
the processor is configured to execute the following instructions: detecting whether the terminal rotates in a gravity direction; when it is detected that the terminal rotates in the gravity direction, determining whether a first specified operation of a user is received, where the first specified operation is used to trigger disabling of a screen auto-rotation function; and disabling screen auto-rotation if the first specified operation of the user is received; or triggering screen auto-rotation if the first specified operation of the user is not received; and
the memory is configured to store the instructions.

With reference to the third aspect, in a first implementation manner, the first specified operation includes:
a pressing operation, a sliding operation, a dragging operation, an operation of continuously tapping on a screen for preset times, or a motion sensing operation.

With reference to the third aspect, in a second implementation manner, the processor is further configured to execute the following instruction:
after the first specified operation of the user is received and screen auto-rotation is disabled, triggering screen auto-rotation if a second specified operation of the user is detected.

With reference to the second implementation manner of the third aspect, in a third implementation manner, the second specified operation includes:
a touching and rotating operation of the user on a screen or a rotation motion sensing operation of the user.

The technical solutions provided by the embodiments of the present invention have the following beneficial effects: it is detected whether a terminal rotates in a gravity direction; when it is detected that the terminal rotates in the gravity direction, it is determined whether a first specified operation of a user is received, where the first specified operation is used to trigger disabling of a screen auto-rotation function; and screen auto-rotation is disabled if the first specified operation of the user is received; or screen auto-rotation is triggered if the first specified operation of the user is not received, which implements limitation on the screen auto-rotation function based on a specified operation, and can resolve a problem that a screen automatically rotates when the user does not expect screen auto-rotation on some occasions. The user does not need to manually disable the screen auto-rotation function, and operations are easy and convenient, which simplifies an operation procedure and is easy to use.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for controlling screen auto-rotation according to an embodiment of the present invention;
FIG. 2 is a flowchart of a method for controlling screen auto-rotation according to another embodiment of the present invention;
FIG. 3 is a flowchart of a method for controlling screen auto-rotation according to another embodiment of the present invention;
FIG. 4 is a structural diagram of an apparatus for controlling screen auto-rotation according to another embodiment of the present invention;
FIG. 5 is a structural diagram of an apparatus for controlling screen auto-rotation according to another embodiment of the present invention; and
FIG. 6 is a structural diagram of a terminal for controlling screen auto-rotation according to another embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

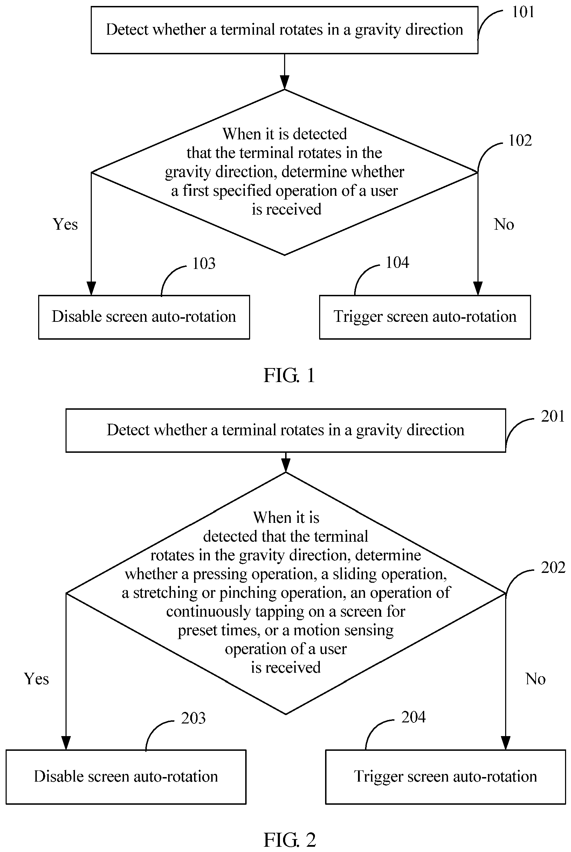

Referring to FIG. 1, an embodiment of the present invention provides a method for controlling screen auto-rotation. The method is applied to a terminal and includes the following steps:
101. Detect whether the terminal rotates in a gravity direction.

In this embodiment, the terminal usually refers to a handheld terminal, which includes but is not limited to a mobile phone, a tablet computer, and the like. The terminal is equipped with a built-in gravity sensor that is configured to detect whether the terminal rotates in the gravity direction. A change in the gravity direction may be reflected in three directions: a direction x, a direction y, and a direction z. The direction x is a horizontal axis direction, the direction y is a vertical axis direction, and the direction z is a direction perpendicular to a plane on which the x and y are located. When the terminal rotates in the gravity direction, angles relative to the directions x, y, and z change. Therefore, whether the terminal rotates in the gravity direction may be determined according to an angle change, which is not excessively described herein.

102. When it is detected that the terminal rotates in the gravity direction, determine whether a first specified operation of a user is received, where the first specified operation is used to trigger disabling of a screen auto-rotation function; and if the first specified operation of the user is received, perform 103; or if the first specified operation of the user is not received, perform 104.

In this embodiment, the first specified operation may be set according to a requirement, which is not specifically limited in this embodiment. Alternatively, the first specified operation may be set by the user, and may be changed, or the like, by the user at any time according to a requirement after the user sets the first specified operation.

103. Disable screen auto-rotation. The procedure ends.

104. Trigger screen auto-rotation. The procedure ends.

In this embodiment, the terminal has the screen auto-rotation function, that is, when it is detected that the terminal rotates in the gravity direction, the terminal automatically triggers screen auto-rotation. The rotation includes rotation from horizontal to vertical, or rotation from vertical to horizontal. The disabling screen auto-rotation means that when a condition of terminal screen auto-rotation is met, the terminal is controlled not to perform screen auto-rotation and still maintains a previous screen state, so as to meet a requirement that the user does not expect screen rotation in some cases.

In this embodiment, the first specified operation may include:
a pressing operation, a sliding operation, a dragging operation, an operation of continuously tapping on a screen for preset times, or a motion sensing operation.

The pressing operation, the sliding operation, the dragging operation, and the operation of continuously tapping on the screen for preset times may be single-finger operations, or may be multi-finger operations, which is not specifically limited in this embodiment.

In this embodiment, optionally, the foregoing method may further include:
if the first specified operation of the user is received, after screen auto-rotation is disabled, triggering screen auto-rotation when a second specified operation of the user is detected.

The second specified operation is used to trigger screen auto-rotation.

Further, the second specified operation may include:
a touching and rotating operation of the user on a screen or a rotation motion sensing operation of the user.

According to the foregoing method provided in this embodiment, it is detected whether a terminal rotates in a gravity direction; when it is detected that the terminal rotates in the gravity direction, it is determined whether a first specified operation of a user is received, where the first specified operation is used to trigger disabling of a screen auto-rotation function; and screen auto-rotation is disabled if the first specified operation of the user is received; or screen auto-rotation is triggered if the first specified operation of the user is not received, which implements limitation on the screen auto-rotation function based on a specified operation, and can resolve a problem that a screen automatically rotates when the user does not expect screen auto-rotation on some occasions. The user does not need to manually disable the screen auto-rotation function, and operations are easy and convenient, which simplifies an operation procedure and is easy to use.

Referring to FIG. 2, another embodiment of the present invention provides a method for controlling screen auto-rotation. The method is applied to a terminal and includes the following steps:
201. Detect whether the terminal rotates in a gravity direction.
202. When it is detected that the terminal rotates in the gravity direction, determine whether a pressing operation, a sliding operation, a dragging operation, an operation of continuously tapping on a screen for preset times, or a motion sensing operation of a user is received; if yes, perform 203; otherwise, perform 204.

The pressing operation, the sliding operation, the dragging operation, and the operation of continuously tapping on the screen for preset times may be single-finger operations, or may be multi-finger operations. The single-finger operation means that the user uses one finger to operate the screen. The multi-finger operation means that the user uses at least two fingers to operate the screen.

For example, a user is playing a game on a mobile phone by using a single finger, and while playing the game, the user finds a sofa and sits down. Because of a change in a body position, the mobile phone rotates in a gravity direction. However, at this time, the user concentrates attention on operations on the mobile phone, and rotation of the mobile phone in the gravity direction is not caused by intended rotation of the mobile phone by the user, but caused by the change in the body position. Therefore, the user does not really expect screen auto-rotation. In this case, screen auto-rotation is disabled when it is detected that the user performs an operation such as tapping or sliding by a single finger, which ensures that the user is not disturbed by unnecessary screen rotation during game playing and enhances user experience.

For another example, a user is viewing a picture by using a tablet computer, the user performs a zoom-in or zoom-out view on the picture by dragging of two fingers. When the user lies down instead of sitting during viewing, a change in a body position causes rotation of the tablet computer in a gravity direction. However, the user does not expect screen auto-rotation. Therefore, in this case, screen auto-rotation is disabled after a dragging operation performed by the user by using two fingers is detected, which ensures that a viewing process of the user is not disturbed by unnecessary screen rotation and enhances user experience.

203. Disable screen auto-rotation. The procedure ends.

204. Trigger screen auto-rotation. The procedure ends.

In this embodiment, optionally, the foregoing method may further include:
after screen auto-rotation is disabled, triggering screen auto-rotation when a second specified operation of the user is detected; where the second specified operation is used to trigger screen auto-rotation.

Further, the second specified operation may include:
a touching and rotating operation of the user on a screen or a rotation motion sensing operation of the user.

In this embodiment, the motion sensing operation means that the user operates the screen by changing a non-contact body movement to implement interaction between the user and the terminal. Herein, it is only limited to a motion sensing operation, but not limited to a specific type of the motion sensing operation; for example, the motion sensing operation may be an upward motion sensing operation, a downward motion sensing operation, a leftward motion sensing operation, a rightward motion sensing operation, or the like.

According to the foregoing method provided in this embodiment, it is detected whether a terminal rotates in a gravity direction; when it is detected that the terminal rotates in the gravity direction, it is determined whether a pressing operation, a sliding operation, a dragging operation, an operation of continuously tapping on a screen for preset times, or a motion sensing operation of the user is received; and if yes, screen auto-rotation is disabled; otherwise, screen auto-rotation is triggered, which implements limitation on a screen auto-rotation function based on a specified operation, and can resolve a problem that a screen automatically rotates when the user does not expect screen auto-rotation on some occasions. The user does not need to manually disable the screen auto-rotation function, and operations are easy and convenient, which simplifies an operation procedure and is easy to use.

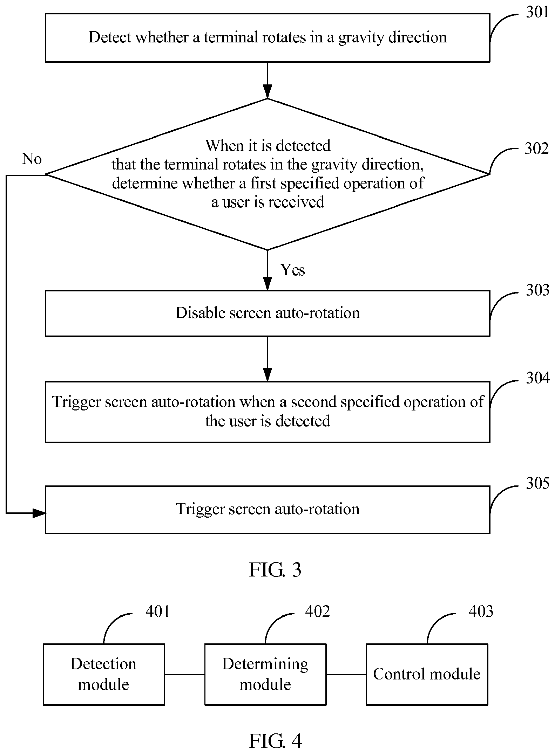

Referring to FIG. 3, another embodiment of the present invention further provides a method for controlling screen auto-rotation. The method is applied to a terminal and includes the following steps:
301. Detect whether the terminal rotates in a gravity direction.
302. When it is detected that the terminal rotates in the gravity direction, determine whether a first specified operation of a user is received, where the first specified operation is used to trigger disabling of a screen auto-rotation function; and if the first specified operation of the user is received, perform 303; or if the first specified operation of the user is not received, perform 305.

In this embodiment, optionally, the first specified operation may include:
a pressing operation, a sliding operation, a dragging operation, an operation of continuously tapping on a screen for preset times, or a motion sensing operation. The pressing operation, the sliding operation, the dragging operation, and the operation of continuously tapping on the screen for preset times may be single-finger operations, or may be multi-finger operations.

303. Disable screen auto-rotation.

304. Trigger screen auto-rotation when a second specified operation of the user is detected. The procedure ends.

The second specified operation is used to trigger screen auto-rotation.

The second specified operation may include:
a touching and rotating operation of the user on a screen or a rotation motion sensing operation of the user.

In this embodiment, the touching and rotating operation means that a finger of the user touches the screen and then leaves a rotation track on the screen, where the track is a curve track, usually a section of a curve track, and a direction of the curve track may be clockwise or may be anticlockwise. The rotation motion sensing operation is that the user operates the screen in a non-contact manner by using a body movement. The body movement is corresponding to a rotation track on the screen, where the track is a curve track, usually a section of a curve track, and a direction of the curve track may be clockwise or may be anticlockwise.

The second specified operation represents that the user expects to control screen auto-rotation in a case in which gravity acceleration of the terminal remains unchanged in a horizontal axis direction or in a vertical axis direction. Therefore, the user may execute the second specified operation to trigger screen auto-rotation.

For example, the user touches the screen by using two fingers: a thumb and a forefinger, and continues to use the two fingers to perform a clockwise rotating operation on the screen, so as to trigger screen auto-rotation. Certainly, in another scenario, the user may use multiple fingers, for example, three fingers, which is not specifically limited in this embodiment.

305. Trigger screen auto-rotation. The procedure ends.

According to the foregoing method provided in this embodiment, it is detected whether a terminal rotates in a gravity direction; when it is detected that the terminal rotates in the gravity direction, it is determined whether a first specified operation of a user is received, where the first specified operation is used to trigger disabling of a screen auto-rotation function; and screen auto-rotation is disabled if the first specified operation of the user is received, and screen auto-rotation is triggered when a second specified operation of the user is detected; or screen auto-rotation is triggered if the first specified operation of the user is not received, which implements limitation on the screen auto-rotation function based on a specified operation, and can resolve a problem that a screen automatically rotates when the user does not expect screen auto-rotation on some occasions; the user does not need to manually disable the screen auto-rotation function; operations are easy and convenient, which simplifies an operation procedure, and are easy to use.

Referring to FIG. 4, another embodiment of the present invention provides an apparatus for controlling screen auto-rotation. The apparatus is applied to a terminal and includes:
a detection module 401, configured to detect whether the terminal rotates in a gravity direction;
a determining module 402, configured to: when the detection module 401 detects that the terminal rotates in the gravity direction, determine whether a first specified operation of a user is received, where the first specified operation is used to trigger disabling of a screen auto-rotation function; and
a control module 403, configured to: disable screen auto-rotation if the first specified operation of the user is received, or trigger screen auto-rotation if the first specified operation of the user is not received.

In this embodiment, optionally, the first specified operation includes: a pressing operation, a sliding operation, a dragging operation, an operation of continuously tapping on a screen for preset times, or a motion sensing operation.

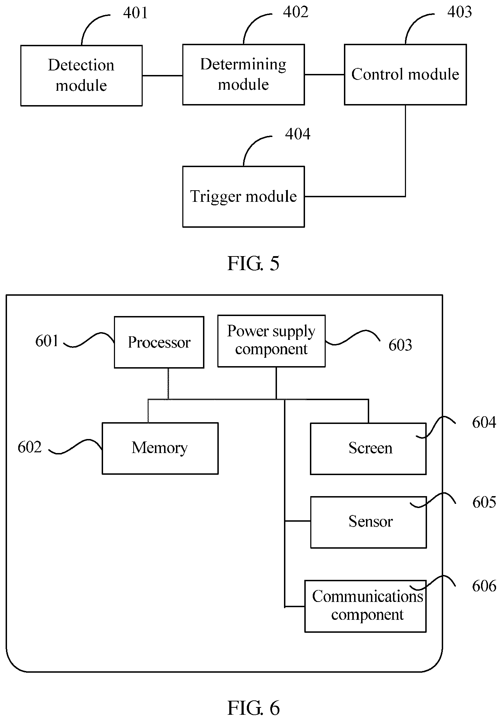

Referring to FIG. 5, optionally, the foregoing apparatus may further include:
a trigger module 404, configured to: after the first specified operation of the user is received and screen auto-rotation is disabled, trigger screen auto-rotation if a second specified operation of the user is detected.

The second specified operation is used to trigger screen auto-rotation.

In this embodiment, the second specified operation may include:
a touching and rotating operation of the user on a screen or a rotation motion sensing operation of the user.

The foregoing apparatus provided in this embodiment may execute the method provided in any one of the foregoing method embodiments. For details, refer to the descriptions in the method embodiments, and details are not described herein.

The terminal is usually a handheld terminal, and includes but is not limited to a mobile phone, a tablet computer, and the like, which is not specifically limited in this embodiment.

The foregoing apparatus provided in this embodiment detects whether a terminal rotates in a gravity direction; when it is detected that the terminal rotates in the gravity direction, determines whether a first specified operation of a user is received, where the first specified operation is used to trigger disabling of a screen auto-rotation function; and disables screen auto-rotation if the first specified operation of the user is received; or triggers screen auto-rotation if the first specified operation of the user is not received, which implements limitation on the screen auto-rotation function based on a specified operation, and can resolve a problem that a screen automatically rotates when the user does not expect screen auto-rotation on some occasions. The user does not need to manually disable the screen auto-rotation function, and operations are easy and convenient, which simplifies an operation procedure and is easy to use.

Referring to FIG. 6, another embodiment of the present invention provides a terminal for controlling screen auto-rotation, which includes a processor 601, a memory 602, a power supply component 603, a screen 604, a sensor 605, and a communication component 606.

The processor 601 is configured to execute the following instructions: detecting whether the terminal rotates in a gravity direction; when it is detected that the terminal rotates in the gravity direction, determining whether a first specified operation of a user is received, where the first specified operation is used to trigger disabling of a screen auto-rotation function; and disabling screen auto-rotation if the first specified operation of the user is received; or triggering screen auto-rotation if the first specified operation of the user is not received.

The memory 602 is configured to store the instructions. The power supply component 603 is configured to supply power to the terminal. The screen 604 is configured to display all kinds of content for the user to view. The sensor 605 is configured to detect various changes of the terminal, where detection of gravity acceleration is included. The communication component 606 is configured to make the terminal communicate with another device in various manners, for example, in a wired manner or a wireless manner.

In this embodiment, optionally, the first specified operation includes:
a pressing operation, a sliding operation, a dragging operation, an operation of continuously tapping on a screen for preset times, or a motion sensing operation.

In this embodiment, optionally, the processor 601 is further configured to execute the following instruction:
after the first specified operation of the user is received and screen auto-rotation is disabled, triggering screen auto-rotation if a second specified operation of the user is detected.

The second specified operation is used to trigger screen auto-rotation.

In this embodiment, optionally, the second specified operation includes:
a touching and rotating operation of the user on a screen or a rotation motion sensing operation of the user.

The foregoing terminal provided in this embodiment may execute the method provided in any one of the foregoing method embodiments. For details, refer to the descriptions in the method embodiments, and details are not described herein.

The terminal is usually a handheld terminal, and includes but is not limited to a mobile phone, a tablet computer, and the like, which is not specifically limited in this embodiment.

The foregoing terminal provided in this embodiment detects whether the terminal rotates in a gravity direction; when it is detected that the terminal rotates in the gravity direction, determines whether a first specified operation of a user is received, where the first specified operation is used to trigger disabling of a screen auto-rotation function; and disables screen auto-rotation if the first specified operation of the user is received; or triggers screen auto-rotation if the first specified operation of the user is not received, which implements limitation on the screen auto-rotation function based on a specified operation, and can resolve a problem that a screen automatically rotates when the user does not expect screen auto-rotation on some occasions. The user does not need to manually disable the screen auto-rotation function, and operations are easy and convenient, which simplifies an operation procedure and is easy to use.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely exemplary embodiments of the present invention, but are not intended to limit the present invention. Any modification, equivalent replacement, and improvement made without departing from the spirit and principle of the present invention should fall within the protection scope of the present invention.

## Claims

1. A method for controlling screen auto-rotation, wherein the method is applied to a terminal and comprises:
detecting whether the terminal rotates in a gravity direction;
when it is detected that the terminal rotates in the gravity direction, determining whether a first specified operation of a user is received, wherein the first specified operation is used to trigger disabling of a screen auto-rotation function; and
disabling screen auto-rotation if the first specified operation of the user is received; or
triggering screen auto-rotation if the first specified operation of the user is not received.

2. The method according to claim 1, wherein the first specified operation comprises:
a pressing operation, a sliding operation, a dragging operation, an operation of continuously tapping on a screen for preset times, or a motion sensing operation.

3. The method according to claim 1, after the disabling screen auto-rotation if the first specified operation of the user is received, further comprising:
triggering screen auto-rotation when a second specified operation of the user is detected.

4. The method according to claim 3, wherein the second specified operation comprises:
a touching and rotating operation of the user on a screen or a rotation motion sensing operation of the user.

5. An apparatus for controlling screen auto-rotation, wherein the apparatus is applied to a terminal and comprises:
a detection module, configured to detect whether the terminal rotates in a gravity direction;
a determining module, configured to: when the detection module detects that the terminal rotates in the gravity direction, determine whether a first specified operation of a user is received, wherein the first specified operation is used to trigger disabling of a screen auto-rotation function; and
a control module, configured to: disable screen auto-rotation if the first specified operation of the user is received, or trigger screen auto-rotation if the first specified operation of the user is not received.

6. The apparatus according to claim 5, wherein the first specified operation comprises:
a pressing operation, a sliding operation, a dragging operation, an operation of continuously tapping on a screen for preset times, or a motion sensing operation.

7. The apparatus according to claim 5, wherein the apparatus further comprises:
a trigger module, configured to: after the first specified operation of the user is received and screen auto-rotation is disabled, trigger screen auto-rotation if a second specified operation of the user is detected.

8. The apparatus according to claim 7, wherein the second specified operation comprises:
a touching and rotating operation of the user on a screen or a rotation motion sensing operation of the user.

9. A terminal for controlling screen auto-rotation, wherein the terminal comprises a processor and a memory, wherein:
the processor is configured to execute the following instructions: detecting whether the terminal rotates in a gravity direction; when it is detected that the terminal rotates in the gravity direction, determining whether a first specified operation of a user is received, wherein the first specified operation is used to trigger disabling of a screen auto-rotation function; and disabling screen auto-rotation if the first specified operation of the user is received; or triggering screen auto-rotation if the first specified operation of the user is not received; and
the memory is configured to store the instructions.

10. The terminal according to claim 9, wherein the first specified operation comprises:
a pressing operation, a sliding operation, a dragging operation, an operation of continuously tapping on a screen for preset times, or a motion sensing operation.

11. The terminal according to claim 9, wherein the processor is further configured to execute the following instruction:
after the first specified operation of the user is received and screen auto-rotation is disabled, triggering screen auto-rotation if a second specified operation of the user is detected.

12. The terminal according to claim 11, wherein the second specified operation comprises:
a touching and rotating operation of the user on a screen or a rotation motion sensing operation of the user.
